# EUROPÄISCHE PATENTSCHRIFT

(11) **EP 2 218 521 B1**
(45) Veröffentlichungstag und Bekanntmachung des Hinweises auf die Patenterteilung: **20.07.2016**
(21) Anmeldenummer: 10001608.8
(22) Anmeldetag: 17.02.2010
(51) Int. Cl.: B08B 3/02, B05B 13/04, B25J 5/02, B25J 18/02, B67C 3/00

(54) **Reinigungsanlage**
Cleaning assembly
Installation de nettoyage

(30) Priorität: 17.02.2009 DE 102009009244
(43) Veröffentlichungstag der Anmeldung: 18.08.2010
(73) Patentinhaber: Jürgen Löhrke GmbH, 23569 Lübeck (DE)
(72) Erfinder: Martin Löhrke, 23569 Lübeck (DE)
(74) Vertreter: Hemmer, Arnd

(56) Entgegenhaltungen:
- WO-A1-02/090007
- WO-A1-2008/061951
- DE-A1- 3 141 516
- DE-A1-102007 005 029
- GB-A- 2 446 739
- US-A- 5 941 290
- US-A1- 2005 092 354

## Beschreibung

Die Erfindung betrifft eine Lebensmittel verarbeitende Anlage, beispielsweise eine Abfüll- oder Verpackungsanlage für Lebensmittel, mit einem Reinigungssystem.

Anlagen in der Lebensmittelindustrie, sei es zur Verarbeitung von Lebensmitteln, sei es zur Abfüllung und Verpackung von Lebensmitteln müssen regelmäßig gereinigt bzw. desinfiziert werden. Dazu ist es heutzutage üblich, beispielsweise in Getrönkeabfüllanlagen so genannte "cleaning in place"-Systeme zu installieren, welche die Anlagen automatisch reinigen können. Dazu ist es erforderlich, an allen zu reinigenden Anlagenteilen Sprühdüsen anzubringen, welche Reinigungs- und Desinfektionsmittel, sei es in flüssiger Form oder als Schaum oder Gel, auf die zu reinigenden Anlagenteile aufsprühen können. Diese über die gesamte Anlage verteilten Düsen erfordern eine umfangreiche Verrohrung. Bei Ausgestaltung der Anlagen ist man bestrebt, diese aus hygienischen Gründen gleich derart zu konstruieren, das möglichst wenig Stellen gegeben sind, an welchen sich Verunreinigungen anlagern können. Diesem zuwider läuft die umfangreiche Verrohrung, welche zu der Reinigungssystem selber erforderlich ist.

WO 02/090007 A1 offenbart eine Vorrichtung zum Reinigen lebensmittelverarbeitender Anlagen gemäß dem Oberbegriff des Anspruchs 1, bei welcher ein linear verfahrbarer Schlitten vorgesehen ist, welcher durch das Innere der Anlagen, beispielsweise einer Durchlaufanlage zum Gefrieren in deren Längsrichtung verfahrbar ist. An diesem Schlitten ist ein Düsenkopf angebracht, um das Innere der Anlage zu reinigen.

WO 2008/061951 A1 offenbart eine Vorrichtung zur Reinigung eines Lagersystems, welches zur Lagerung von Lebensmitteln geeignet ist. Bei diesem Reinigungssystem wird mittels einer Verfahreinheif eine bürsten und Düsen aufweisende Reinigungseinheit in die Lagerzellen verfahren, um diese von innen zu reinigen.

Es ist Aufgabe der Erfindung, ein verbessertes Reinigungssystem für Lebensmittel verarbeitende Anlagen bereitzustellen, welches einfacher und mit geringerer Beeinträchtigung des hygienischen Maschinendesigns in die Anlage integriert ist und in der Lage ist, komplexe Maschinenstrukturen zu reinigen.

Diese Aufgabe wird gelöst durch eine Lebensmittelverarbeitende Anlage mit einem Reinigungssystem mit den in Anspruch 1 angegebenen Merkmalen. Bevorzugte Ausfühfungsformen ergeben sich aus den zugehörigen Unteransprüchen, der nachfolgenden Beschreibung und den beigefügten Figuren.

Die erfindungswesentliche Idee liegt darin, zur Reinigung der Anlage nicht mehr eine Vielzahl von fest installierten Düsen an allen zu reinigenden Stellen vorzusehen, sondern stattdessen eine geringer Anzahl von beweglichen Düsen einzusetzen, welche gezielt an die zu reinigenden Stellen der Anlage verfahren werden können. Dazu ist es vorgesehen, eine Führungsbahn anzuordnen, an welcher ein Roboterarm verfahrbar gelagert ist. Die Führungsbahn bildet somit eine Schiene, an der der Roboterarm entlang bewegt werden kann. Der Roboterarm selber trägt an seinem freien beweglichen Ende zumindest eine Düse zum Ausbringen eines Reinigungsmittels. Dieses kann ein Reinigungs- oder Desinfektionsmittel, sei es in flüssiger Form oder als Schaum, Gel, Wasser oder Dampf, oder ein sonstiges zur Reinigung der Anlage erforderliches Medium sein. Der Roboterarm selber ermöglicht eine Beweglichkeit der Düse relativ zu dem Anlenkungspunkt an der Führungsbahn, so dass der Roboter der Bewegung der Düse noch zusätzliche Freiheitsgrade über die Beweglichkeit entlang der Führungsbahn hinaus ermöglicht. Die Anzahl der Freiheitsgrade des Roboterarms und dessen genaue geometrische Gestaltung sowie die genaue Anordnung der Führungsbahn ist so gewählt, das durch Verfahren und Bewegen des Roboterarms die zumindest eine Düse an alle Stellen in der Anlage, welche zu reinigen sind, bewegt werden kann, um dort dann punktgenau das Reinigungsmittel auszubringen.

Durch diese erfindungsgemäße Ausgestaltung wird die gesamte feste Verrohrung für ein Reinigungs- oder Desinfektionssystem an der Anlage überflüssig. Dies vereinfacht den Anlagenaufbau erheblich und verbessert das hygienische Design der Anlage, da durch das Reinigungssystem keine zusätzlichen Stellen, an denen sich Verunreinigungen anlagern könnten, geschaffen werden. Darüber hinaus ermöglicht das erfindungsgemäße System eine sehr flexible Anlagenreinigung, da durch einfache Änderung der Steuerung des Verfahr- und Bewegungssystems des Roboters der Reinigungsprozess verändert und unterschiedlichen Anforderungen angepasst werden kann. So können Sprühwinkel der Düse und ähnliches leicht verändert werden, um Reinigungsfunktionen optimal anpassen zu können, ohne Umbaumdßnahmen an der Anlage vornehmen zu müssen.

Der Roboterarm weist zumindest zwei und bevorzugt sechs Freiheitsgrade für die Bewegung der Düse auf. Es handelt sich dabei um Freiheitsgrade bezogen auf den Anlenkpunkt an der Führungsbahn. Die Beweglichkeit entlang der Führungsbahn bildet dann einen zusätzlichen Freiheitsgrad. Der Roboterarm kann als Knickarmroboter, ähnlich einem üblichen Industrieroboter ausgebildet sein. Allerdings können auch andere Roboterarme zum Einsatz kommen. Beispielsweise kann es sich auch um einen Pendelarm- oder Zylinderkoordinatenroboter handeln. Auch ein Portalsystem wäre denkbar. Die Zahl der erforderlichen Freiheitsgrade und das genaue konstruktionsprinzip hängt maßgeblich vom Aufbau der :zu reinigenden Anlage ab. Der Roboterarm und die Führungsbahn müssen so angeordnet sein, dass alle zu reinigende Punkte angefahren werden können. Die Düse ist vorzugsweise am freien äußeren Ende des Roboters angeordnet, so dass sie eine größtmögliche Beweglichkeit aufweist.

Erfindungsgemäß ist die Führungsbahn oberhalb der zu reinigenden Anlage angebracht und der Roboter hängend an der Führungsbahn geführt. Dieser Aufbau beeinträchtigt die zu reinigende Anlage relativ wenig. Darüber hinaus wird die Zugangigkeit der Anlage von allen Seiten durch das Reinigungssystem nicht eingeschränkt. Auch können die Führungsbahn selber und der Roboterarm weniger verschmutzen. Allerdings wäre es grundsätzlich auch möglich, die Führungsbahn seitlich oder unterhalb der zu reinigenden Anlage anzuordnen und den Roboter gegebenenfalls entsprechend stehend oder seitlich hängend an der Führungsbahn zu führen. Auch ist es denkbar, dass die Führungsbahn in ihrem Verlauf ihre relative vertikale Position zu der Anlage ändert, d. h. in einigen Bereichen der Anlage seitlich oder unterhalb und in anderen Anlagenbereichen oberhalb der Anlage geführt ist.

Die Führungsbahn verläuft zumindest entlang der Außenkontur der Anlage, insbesondere entlang der gesamten Außenkontur der Anlage, so dass der Roboterarm und die Düse von allen Seiten an die Anlage heranbewegt werden können.

Das erfindungsgemäße System ist nicht auf die Reinigung einer einzelnen Anlage beschränkt, vielmehr ist es auch möglich, die Führungsbahn entlang mehrerer zu reinigenden Anlagen anzuordnen. Dies können miteinander im Zusammenhang stehenden Anlagen, aber auch voneinander unabhängige Anlagen sein, welche durch ein und denselben Reinigungsroboter gereinigt werden. So ist es beispielsweise möglich, in einem Abfüllbetrieb mit mehreren Abfüllstraßen, einen einzigen Reinigungsroboter vorzusehen, welcher die Straßen abwechselnd reinigt, während die anderen Abfüllanlagen im normalen Betrieb sind. Der Roboterarm wird dazu lediglich entlang der Führungsbahn zu der grade zu reinigenden Anlage verfahren. Das erfindungsgemäße Reinigungssystem ist dabei nicht auf die Reinigung von Anlagen beschränkt, vielmehr können auch weitere Gegenstände oder der Raum, in welchem sich das Reinigungssystem befindet, gereinigt werden. Die Führungsbahn muss lediglich entsprechend angeordnet werden, dass der Roboterarm alle zu reinigenden Bereiche erreichen kann. Auf diese Weise können die Investitionskosten verringert werden, da die Zahl der erforderlichen Roboterarme reduziert wird. Dabei ist zu verstehen, dass das erfindungsgemäße System nicht auf die Anordnung eines Roboterarmes beschränkt ist, es ist auch denkbar in dem System mehrere Roboterarme vorzusehen, um die Reinigung schneller durchführen zu können.

In komplexeren Systemen wird es erforderlich sein, die Führungsbahn mit Abzweigungen zu versehen. So kann in der Führungsbahn zumindest eine Verzweigung vorhanden sein, wobei am Abzweigpunkt eine Weiche oder ein Drehteller zu Richtungsänderung angeordnet ist. Bei dem Drehteller kann der Roboterarm auf der Stelle gedreht werden. So können sehr kleine Abbiegeradien erreicht werden. Auf dem Drehteller wird ein Stück der Führungsbahn mit dem an dieser Stelle positionierten Roboterarm auf der Stelle gedreht. Insgesamt kann die Führungsbahn modular aufgebaut sein. Das heißt, es können Standardabschnitte mit Geraden oder Radien vorgesehen sein, welche je nach Einsatzort entsprechend miteinander kombiniert werden können, um eine für die zugehörige Anlage passende Führungsbahn auszubilden. Alternativ können auch individuelle Teilstücke mit speziellen Formen oder Krümmungsradien gefertigt werden. Der modulare Aufbau hat jedoch den Vorteil, dass die Zahl der zu fertigenden Einzelteile für die Führungsbahn auf wenige Standardteile reduziert werden kann.

Gemäß einer weiteren bevorzugten Ausführungsform ist in dem System eine Reinigungsstation vorgesehen, zu welcher die Führungsbahn führt und an welcher Reinigungsdüsen zur Außenreinigung des Roboterarmes angeordnet sind. Dies ermöglicht es, den Roboterarm entlang der Führungsbahn in die Reinigungsstation zu verfahren und dort mit den fest installierten Reinigungsdüsen mit geeigneten Reinigungs- und Desinfektionsmedien von außen zu reinigen. Der Roboterarm selber ist vorzugsweise mit einem Schutzmantel bzw. Schutzanzug, beispielsweise aus einer dichten Kunststofffolie versehen, so dass zum einen eine Verunreinigung der mechanischen Teile des Roboterarmes verhindert wird und zum anderen verhindert wird, dass vom Roboterarm Verunreinigungen in die Anlage gelangen können. Ein solcher Schutzanzug ist besonders günstig durch Absprühen zu reinigen.

Die Führungsbahn ist vorzugsweise aus zumindest einem Rundprofil, weiter bevorzugt aus zwei parallel zueinander verlaufenden Rundprofilen gebildet. Derartige Rundprofile, beispielsweise aus rostfreiem Stahl, sind als Standardteile wie Rohre oder Vollmaterial verfügbar. Darüber hinaus lassen sie sich leicht in gewünschte Radien biegen und weisen eine glatte gut zu reinigende Oberfläche auf, an welcher sich Verunreinigungen nur schlecht anlagern können. Bevorzugt ist die Schiene bzw. Führungsbahn aus zwei parallel zueinander angeordneten Rundprofilen bzw. Rohren gebildet. Eine solche Anordnung ermöglicht eine bessere Führung des Roboterarmes, da ein Pendeln oder Drehen um die Längsachse der Führungsbahn verhindert werden kann. Die beiden Rundprofile sind vorzugsweise über Querstege fest miteinander verbunden. Die Querstege sind weiter bevorzugt in regelmäßigen Abständen zueinander angeordnet, so dass sie gleichzeitig der Weg- bzw. Positionserfassung beim Verfahren des Roboters entlang der Führungsbahn dienen können, da durch ein geeignetes Erfassungssystem einfach die Zahl der passierten Stege gezählt werden kann, um so eine zurückgelegte Wegstrecke und damit die Position des Roboterarmes zu ermitteln. Zusätzlich oder alternativ kann die Positionserfassung auch über andere Wegmess- bzw. Aufnahmesysteme erfolgen, beispielsweise können auch die Umdrehungen eines auf der Führungsbahn abrollenden Antriebs- oder Führungsrades zur Wegerfassung gezählt werden.

Weiter bevorzugt ist im Inneren der Führungsbahn eine Fluidleitung zur Zufuhr des Reinigungsmittels ausgebildet. Dies ist besonders günstig dann möglich, wenn die Führungsbahn zumindest ein rohrförmiges Profil aufweist, da dieses Rohr dann in seinem Inneren gleichzeitig das Reinigungsmedium führen kann. Auf diese Weise wird die Zahl der Einzelteile und der Materialaufwand reduziert.

In einer weiteren bevorzugten Ausführungsform erfolgt die Reinigungsmittelzufuhr zu dem Roboterarm über eine Schlauchleitung welche den Roboterarm mit einem zentralen Anschluss für die Zufuhr des Reinigungsmittels verbindet. So kann beispielsweise bei einer ringförmigen Kontur der Führungsbahn der zentrale Anschluss im Wesentlichen in der Mitte der Bahn angeordnet sein und der Schlauch erstreckt sich von dort in etwa radial zu dem Roboterarm an der Führungsbahn. Bei Bewegung des Roboterarmes dreht sich der Schlauch dann um den zentralen Anschluss. In diesem ist vorzugsweise ein drehender Anschluss bzw. Drehkupplung vorgesehen, so dass die Bewegung des Roboterarmes entlang der Führungsbahn durch diese Schlauchzufuhr nicht eingeschränkt wird. Auch die elektrische Energieversorgung eines Antriebes an dem Roboterarm kann über ein entsprechendes Kabel, welches sich ähnlich zu der Schlauchleitung erstreckt, erfolgen. Auch Daten bzw. Steuerleitungen können so verlegt sein. Daten- bzw. Steuersignale könnten jedoch auch drahtlos per Funk übertragen werden. Die elektrische Energieversorgung könnte darüber hinaus auch über Stromschienen entlang der Führungsbahn realisiert werden.

Gemäß einer weiteren bevorzugten Ausführungsform ist an der Führungsbahn eine Docking-Station angeordnet, welche Anschlusskupplungen für zumindest eine Fluidleitung und vorzugsweise zumindest einen elektrischen Anschluss aufweist, wobei der Roboterarm korrespondierende Anschlusskupplungen aufweist, welche bei Erreichen der Docking-Station mit den Anschlusskupplungen der Docking-Station in Eingriff treten können. Die korrespondieren Anschlusskupplungen des Roboterarmes sind vorzugsweise an oder in der Basis des Roboterarmes, welche verfahrbar an der Führungsbahn geführt ist, angeordnet. Die Docking-Station und die korrespondierenden Anschlusskupplungen ermöglichen es, wenn der Roboterarm die Position der Docking-Station an der Führungsbahn erreicht, dass der Roboterarm mit seinen Anschlusskupplungen an die Anschlusskupplungen der Docking-Station andocken kann, so dass dort eine Verbindung der Fluidleitung zwischen der Docking-Station und dem Roboterarm und gegebenenfalls auch elektrische Verbindungen hergestellt werden. Auf diese Weise kann die Zufuhr des Reinigungsmittels durch die Fluidleitung von der Docking-Station in den Roboterarm erfolgen. So kann auf die Zuführung mittels einer Schlauchleitung zu einem zentralen Punkt verzichtet werden. Stattdessen werden dann bevorzugt an allen Punkten der Führungsbahn, an welchen Reinigungsaufgaben durch den Roboterarm durchzuführen sind, entsprechende Docking-Stationen angeordnet, um die Zufuhr von Reinigungsmittel zu dem Roboterarm an diesen Stellen zu gewöhrleisten. Der Roboterarm fährt dann von Docking-Station zu Docking-Station, um dort dann jeweils anzudocken und einen Reinigungsvorgang an einem speziellen Punkt bzw. Bereich der Anlage durchzuführen. Die Stromversorgung des Roboterarmes kann ebenfalls über die Docking-Station oder, wie oben beschrieben, beispielsweise über Stromschienen entlang der Führungsbahn erfolgen. Wenn die Stromversorgung über die Docking-Station erfolgt, kann es zweckmäßig sein, den Roboterarm mit einem Energiespeicher, beispielsweise einem Akku zu versehen, der es dem Roboterarm ermöglicht, durch eigenen Antrieb von einer Docking-Station zur nächsten zu verfahren. Der Signalübertragung für Sensor- bzw. Steuersignalen erfolgt in diesem Fall vorzugsweise über Funk, könnte jedoch auch über elektrische Kontakte an der Docking-Station realisiert werden.

Auch ist es möglich, die Reinigungsmittelzufuhr und die elektrischen Anschlüsse des Roboterarmes in einer Kombination einer zentralen Zuführung und einer Art Docking-Station zu reduzieren. Wenn die Führungsbahn so ausgestaltet ist, das mit einem Roboterarm mehrere Anlagen beispielsweise in einer großen Halle gereinigt werden können, ist es denkbar, dass im Bereich jeder Anlage eine Docking-Station vorgesehen ist, an welcher der Roboter dann ankoppelt, wobei diese DockingStation gemeinsam mit dem Roboter über einen bestimmten Bereich der Führungsbahn bewegbar ist, in welchem dann die Reinigungsmittelzufuhr und gegebenenfalls die elektrische Energieversorgung über Schlauchleitungen bzw. Kabel von einem zentralen Punkt aus erfolgen. Wenn der Roboter dann zur nächsten Anlage weiter fährt, koppelt er von der Docking-Station ab, fährt zu der nächsten Anlage und koppelt dort dann wieder an eine entsprechende Docking-Station an. Auf diese Weise können auch sehr große Anlagen problemlos durch einen oder wenige Roboterarme in der vorangehend beschriebenen Ausgestaltung gereinigt werden. Die einzelnen Anlagen bzw. Anlagenteile müssen nur über entsprechende Führungsbahnen miteinander verbunden sein, so dass der Roboterarm zwischen den einzelnen Anlagen verfahren kann.

Bevorzugt weist der Roboterarm eine Verfahreinheit auf, welche an der Führungsbahn geführt ist und einem Antrieb zum Verfahren des Roboterarmes entlang der Führungsbahn hat. Die Verfahreinheit bildet die Basis des Roboterarmes, welche den Roboterarm an der Führungsbahn hält. Die Verfahreinheit weist vorzugsweise mehrere Führungs- bzw. Antriebsrollen auf, wobei es ausreicht, eine Rolle anzutreiben. Bevorzugt rollt die Antriebsrolle reibschlüssig auf der Führungsbahn ab. Es ist jedoch auch denkbar, eine Verzahtung vorzusehen, über welche ein Antriebsritzel mit der Führungsbahn formschlüssig in Eingriff tritt. Vorzugsweise ist ein elektrischer Antriebsmotor in der Verfahreinheit angeordnet, welcher eine oder mehrere Antriebsrollen antreibt.

Der Roboterarm selber ist aus zwei Schenkeln gebildet, wobei sich ein erster Schenkel ausgehend von der Führungsbahn erstreckt und der zweite Schenkel an dem der Führungsbahn abgewandten Ende des ersten Schenkels vorzugsweise schwenkbar angelenkt ist. Der erste Schenkel erstreckt sich vorzugsweise senkrecht von der Führungsbahn nach unten und der zweite Schenkel erstreck sich quer zu dieser Richtung, wobei er vorzugsweise um 180° relativ zu der Längsachse des ersten Schenkels verschwenkbar ist. Das heißt, der Schenkel kann senkrecht nach oben klappen und über eine Ausrichtung von 90° zu dem ersten Schenkel bis in eine Lage, in welcher er im Wesentlichen nach unten weist, verschwenkt werden. Es muss jedoch kein Verschwenkbereich um wirklich 180° vorgesehen sein, es ist auch ein kleinerer Verschwenkbereich denkbar, wobei die Verschwenkbewegung vorzugsweise in einer Ebene erfolgt, welche sich parallel zur Längsachse des ersten Schenkels erstreckt.

Der erste Schenkel, welcher sich bevorzugt in vertikaler Richtung erstreckt, ist weiter bevorzugt teleskopierbar ausgebildet, so dass der ver tikale Abstand der Düse zu der Führungsbahn durch Ein- und Ausfahren des senkrechten Schenkels verändert werden kann. Auch der zweite Schenkel kann teleskopierbar ausgebildet sein.

Weiter bevorzugt ist zumindest einer der Schenkel um seine Achse drehbar. Besonders bevorzugt sind beide Schenkel um ihre Achse drehbar.

Der zweite Schenkel trägt an seinem freien, dem ersten Schenkel abgewandten Ende bevorzugt einen Düsenstock mit der Düse. Dabei ist der Düsenstock weiter bevorzugt drehbar angeordnet. Besonders bevorzugt erstreckt sich der Düsenstock am Ende des zweiten Schenkels senkrecht zu diesem und ist um seine Längsachse drehbar. Die eigentliche Düse ist dabei vorzugsweise in einer Richtung parallel zu dem zweiten Schenkel gerichtet, so dass die Abstrahlrichtung der Düse durch Drehen des Düsenstocks um 360° gedreht werden kann.

Die Reinigungsmittelzufuhr im Roboterarm erfolgt entweder durch eine außen am Roboter verlegte Schlauchleitung, wobei diese dann vorzugsweise innerhalb eines Schutzanzuges des Roboters, sofern dieser vorgesehen ist, angeordnet wird. Alternativ ist es auch möglich die Reinigungsmittelzufuhr durch das Innere des Roboterarmes verlaufen zu lassen. Auch Kombinationen beider Systeme sind möglich. So ist es besonders bevorzugt, das entlang des ersten teleskopierbaren Schenkels die Reinigungsmittelzufuhr durch einen Spiralschlauch erfolgt, wobei dieser Spiralschlauch dann in den zweiten Schenkel mündet. Diese Mündung ist vorzugsweise in einem Abschnitt des zweiten Schenkels, welcher dem ersten Schenkel zugewandt ist, angeordnet. Die weitere Reinigungsmittelzufuhr zu der Düse erfolgt dann durch das Innere des zweiten Schenkels, so dass dieser insgesamt relativ dünn und schlank ausgestaltet werden kann, so dass er auch in enge Freiräume in der Anlage zu deren Reinigung eindringen kann.

Besonders bevorzugt erfolgt die Reinigungsmittelzufuhr im zweiten Schenkel durch ein im Inneren des zweiten Schenkel gelegenen Rohr. Dieses Rohr kann dann gleichzeitig dazu dienen, eine Drehbewegung auf den Düsenstock zu übertragen. So kann insgesamt eine sehr schlanke Ausgestaltung des zweiten Schenkels durch zwei konzentrisch ineinander angeordnete Rohre erreicht werden. Dabei kann sich das äußere Rohr vorzugsweise um seine Längsachse drehen, so dass die Düse bzw. der Düsenstock um die Längsachse des zweiten Schenkels gedreht werden kann. In dem Fall, das der Düsenstock sich normal zu dieser Längsachse erstreckt, ist darüber hinaus durch Drehung des inneren Rohres über ein Kegelradgetriebe auch eine Drehung des Düsenstockes um seine sich quer zur Längsachse des zweiten Schenkels erstreckende Längsachse möglich.

Bei einer weiteren bevorzugten Ausführungsform weist der Roboterarm eine Werkzeugaufnahme auf, welche vorzugsweise am freien Ende des Roboterarmes angeordnet ist und in welche ein Düsenstock mit der Düse austauschbar aufgenommen ist. Dies ermöglicht einen einfachen Düsenwechsel, da die Düse aus der Werkzeugaufnahme entnommen und durch eine andere Düse ersetzt werden kann. Ein solcher Wechsel des Düsenstockes kann bevorzugt automatisch erfolgen. Dazu kann in dem Reinigungssystem eine Wechselstation vorgesehen sein, an welcher die verschiedenen Düsenstöcke bereitgehalten werden und welche zum Düsenwechsel von dem Roboterarm angefahren wird, wobei der Roboterarm dann einen Düsenstock ablegt und einen anderen Düsenstock aufnimmt. Die Werkzeugaufnahme ist dazu vorzugsweise mit einer automatischen bzw. ferngesteuert betätigbaren Kupplungsvorrichtung zum Ergreifen und Lösen der Düsenstöcke versehen.

Weiter bevorzugt weist der Roboterarm eine Werkzeugaufnahme auf, welche zur Aufnahme von Bearbeitungs- und Handhabungswerkzeugen und/oder Sensoren ausgebildet ist. Bevorzugt ist dies dieselbe Werkzeugaufnahme, welche auch zur Aufnahme der unterschiedlichen Düsenstöcke dient. Dies ermöglicht es, dass der Roboterarm auch andere Bearbeitungs- bzw. Handhabungsaufgaben ausführen kann, so dass eine universelle Verwendung des Roboterarmes in der Anlage möglich wird. So kann der Roboterarm in einer Verpackungsanlage beispielsweise außerhalb der Reinigungsvorgänge dazu dienen, Produkte in eine Verpackung einzulegen. Auf diese Weise werden Ruhezeiten des Roboterarmes, in denen dieser ungenutzt ist, vermieden. Es ist jedoch zu verstehen, das entsprechende Handhabungs- oder Bearbeitungseinrichtungen auch fest gleichzeitig zu einem Düsenstock an dem Roboterarm angeordnet sein können, so dass ein Austausch der einzelnen Werkzeuge bzw. Düsenstöcke nicht erforderlich ist, sondern diese ständige mit dem Roboterarm mitgeführt werden.

In den Zeiten, in den der Roboter nicht zu Reinigungsaufgaben verwendet wird, kann er, wie beschrieben zu Handhabungs- oder Bearbeitungsaufgaben eingesetzt werden.

-Darüber hinaus ist auch ein Einsatz von Bio- Monitoring möglich. Dazu trägt der Roboterarm dann zumindest einen Sensor, welcher geeignet ist, bestimmte Kontrollpunkte an der Anlage vorzugsweise optisch abzulesen. Dieser Sensor kann fest an dem Roboterarm angebracht sein oder beispielsweise auch als austauschbares Werkzeug ausgebildet sein, welches von dem Roboterarm nur dann aufgenommen wird, wenn der Roboterarm für das Bio-Monitoring eingesetzt wird.

Die Erfindung ermöglicht ein Reinigungsverfahren zur Reinigung einer Lebensmittel verarbeitenden Anlage. Bei dem Reinigungsverfahren wird ein Reinigungssystem gemäß der vorangehenden Beschreibung eingesetzt. Daher ist zu verstehen, dass Merkmale, welche oben anhand des Reinigungssystems beschrieben worden sind, ebenfalls bei dem nachfolgend beschriebenen Reinigungsverfahrens zur Anwendung kommen können.

Bei dem genannten Reinigungsverfahren wird eine Düse zum Ausbringen eines Reinigungsmittels mittels eines an einer Führungsbahn verfahrbaren Roboterarmes zu den zu reinigenden Punkten der Anlage bewegt. Dort wird dann aus der Düse das Reinigungsmittel auf die Anlage ausgebracht. Dies ermöglicht es, durch Verfahren und entsprechende Platzierung der Düse Anlagenteile punktgenau zu reinigen. Das heißt, es muss nicht mehr die Anlage großflächig mit Reinigungsmittel eingesprüht werden, sondern es können gezielt die verschmutzungsanfälligen Bereiche gereinigt werden. Auch können einzelne Bereiche unterschiedlich intensiv oder auch in unterschiedlichen Zeitintervallen gereinigt werden. Das Verfahren ermöglicht hier eine sehr flexible Ausführung des Reinigungsverfahrens. So kann die Menge des erforderlichen Reinigungsmittels reduziert werden. Darüber hinaus ist keine aufwändige Installation eines Reinigungssystems innerhalb der Anlage erforderlich.

Ferner ist es bevorzugt vorgesehen, dass der Roboterarm entlang der Führungsbahn in eine Reinigungsstation verfahren wird, in welcher durch feststehende Reinigungsdüsen von außen gereinigt wird. Dies erfolgt vorzugsweise nach den von dem Roboterarm durchgeführten Reinigungsaufgaben, so dass anschließend der Roboter selber gereinigt wird und dann sauber für den nächsten Einsatz zur Verfügung steht. Es ist jedoch auch denkbar, den Roboterarm direkt vor einem Reinigungsvorgang zu reinigen, um zu verhindern, dass bei der Reinigung die Anlage durch den Roboter selbst kontaminiert wird.

Besonders bevorzugt ist es, dass der Roboterarm in den Zeiten in denen er keine Reinigungsaufgaben ausführt, für Handhabungs-, Bearbeitungs- oder Überwachungsaufgaben oder sonstige Aufgaben in der Anlage eingesetzt wird. So wird eine universelle Nutzung des Roboterarmes erreicht, welche Stillstandzeiten vermeidet. Beispielsweise könnte der Roboterarm eingesetzt werden, um in einer Verpackungsanlage Waren bzw. Produkte in Verpackungen einzulegen. Ferner könnten befüllte Behältnisse von einem Förderband abgenommen und auf Paletten abgesetzt werden und ähnliches. Darüber hinaus könnte der Roboterarm auch Überwachungs- und Kontrollaufgaben aufnehmen, beispielsweise über geeignete an dem Roboterarm angebrachte Sensoren ein Bio-Monitoring innerhalb der Anlage durchführen, indem im Betrieb einzelne Punkte angefahren werden und dort angebrachte Bio-Indikatoren von einem an dem Roboterarm angebrachten Sensor, beispielsweise einer Kamera gescannt bzw. ausgelesen werden.

Das Reinigungssystem gemäß der vorangehenden Beschreibung weist vorzugsweise eine Steuereinrichtung auf, welche den gesamten Reinigungsvorgang steuert. Diese Steuereinrichtung kann mit der üblichen Anlagen- bzw. Maschinensteuerung der zu reinigenden Anlagen verknüpft sein, so dass die Reinigungsvorgänge automatisch zu bestimmten Zeitpunkten durchgeführt werden können. Darüber hinaus kann die Maschinensteuerung dann auch zu den Zeiten, in welchen der Roboterarm nicht zur Reinigung eingesetzt wird, diesen ansteuern, um die genannten anderen Aufgaben durchzuführen.

Das Reinigungssystem wird erfindungsgemäß in einer Anlage zur Verarbeitung von Lebensmitteln, beispielsweise einer Anlage zum Verpacken oder Abfüllen von Lebensmitteln, beispielsweise in einer Flaschenabfüllanlage eingesetzt. Anlagen mit einem solchen Reinigungssystem sind Gegenstand der Erfindung.

Nachfolgend wird die Erfindung beispielhaft anhand der beigefügten Figuren beschrieben. In diesen zeigt:
- Fig. 1: eine schematische perspektivische Gesamtansicht einer Abfüllanlage mit dem erfindungsgemäßen Reinigungssystem,

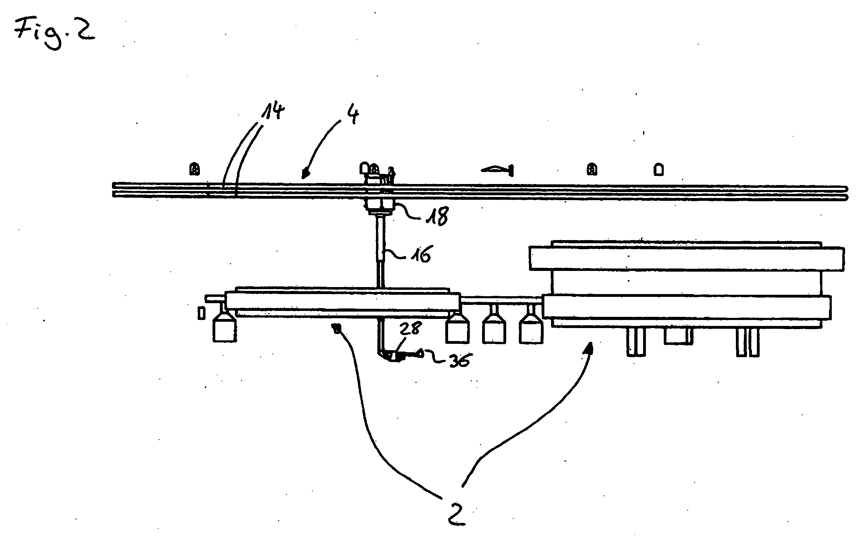

- Fig. 2: eine Seitenansicht der Anlage gemäß Fig. 1,

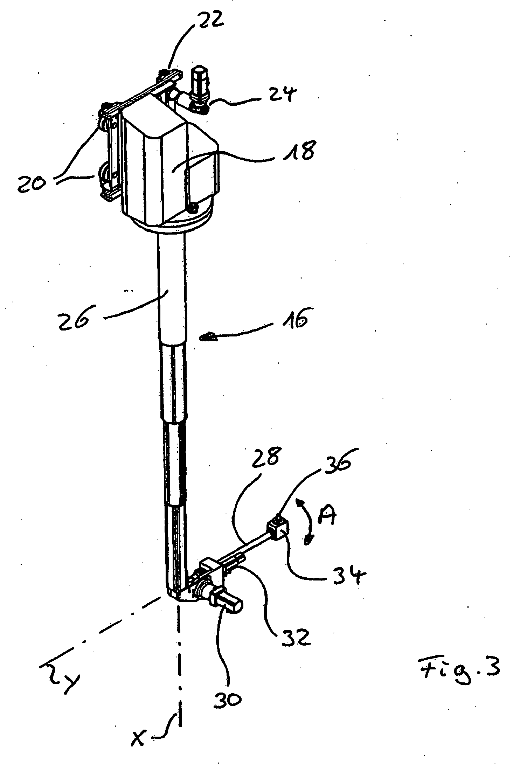

- Fig. 3: eine perspektivische Ansicht des Roboterarms;

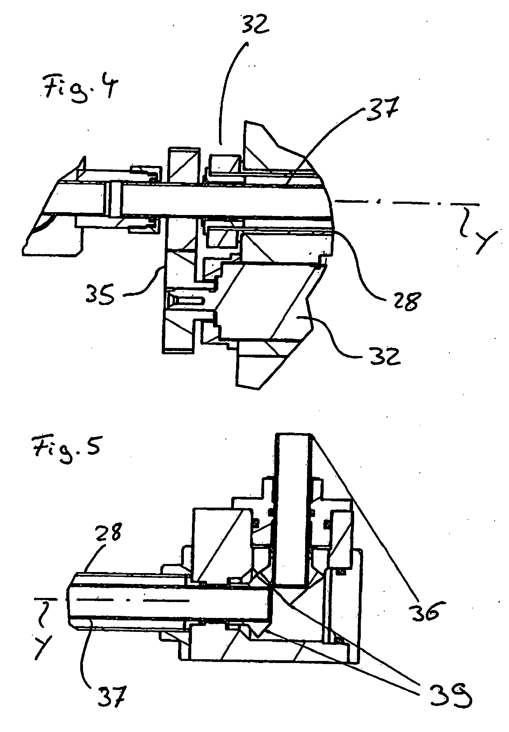

- Fig. 4.: eine Schnittansicht des hinteren, einem ersten Schenkel zugewandten Endes eines zweiten Schenkels des Roboterarms, und
- Fig. 5.: eine Schnittansicht des vorderen freien Endes des zweiten Schenkels.

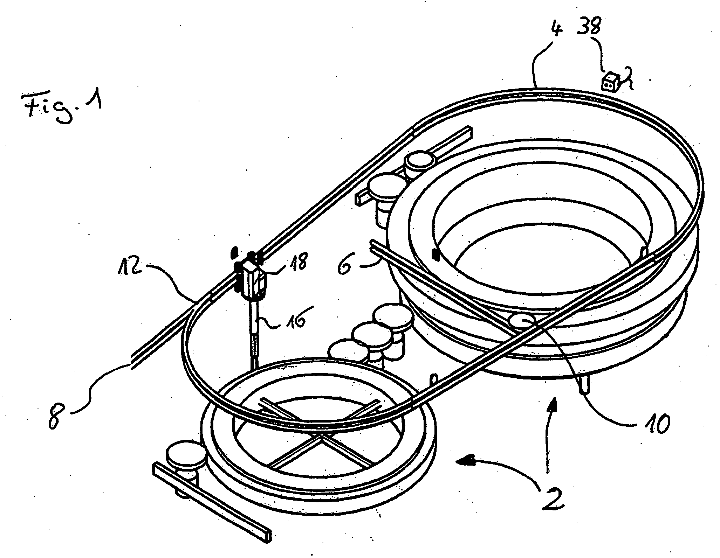

- Fig. 1: zeigt schematisch die Gesamtansicht einer erfindungsgemäßen Lebensmittel verarbeitenden Anlage in Form eines Abfüllers 2, an welchem das Reinigungssystem angebracht ist. Das Reinigungssystem weist eine Führungsbahn 4 auf, welche oberhalb des Abfüllers 2 angeordnet und diesen an seiner Außenkontur umfährt. So bildet die Führungsbahn 4 in etwa ein Oval, wobei zusätzlich in der Mitte eine Mittelsteg 6 und an einer Seite ein tangentialer Abzweig 8 vorgesehen sind. Der Mitteilsteg ist mit dem umgebenden Oval über einen Drehteller 10 verbunden. Der tangentiale Abzweig 8 ist mit dem Oval über eine Weiche 12 verbunden. Die Führungsbahn 4 selber ist aus zwei übereinander angeordneten, sich parallel zueinander erstreckenden Rohren 14 gebildet. Auf dieser Führungsbahn 4 ist ein Roboterarm 16 verfahrbar. Dazu ist der Roboterarm 16 mit seiner Basis 18, welche eine Verfahreinheit bildet, auf der Führungsbahn 4 gelagert.

An der Basis des Roboterarms 16 sind Führungsrollen 20 sowie eine Antriebsrolle 22 angeordnet. Die Antriebsrolle 22 ist über einen Elektromotor 24 angetrieben. Die Rollen 20 und 22 liegen offen an einer Seite der Basis 18 und umgreifen die Oberseite und die Unterseite des Paars von Führungsrohren 14 der Führungsbahn 4. Die seitliche offene Anordnung hat den Vorteil, dass die Rollen 20, 22 leicht zu reinigen sind.

Ausgehend von der Basis 18 erstreckt sich ein erster Schenkel 26 des Roboterarmes senkrecht nach unten. Der erste Schenkel 26 ist im hier gezeigten Beispiel dreifach teleskopierbar ausgebildet. Das Ausfahren des Teleskops erfolgt durch die Gewichtskraft. Das Einfahren durch ein im Inneren des Schenkels 26 angeordnetes Zugseil, welches durch einen Elektromotor in der Basis 18 aufgerollt werden kann.

An dem der Basis 18 abgewandten Längsende des ersten Schenkels 26 ist an diesem ein zweiter Schenkel 28 angebracht. Der zweite Schenkel 28 ist über einen Schwenkantrieb 30 in Richtung des Pfeils A verschwenkbar, d. h. er verschwenkt um eine Schwenkachse, welche sich normal zu der Längsachse X des ersten Schenkels 28 erstreckt, wobei die Längsachse X sowie die Längsachse Y des zweiten Schenkels 28 in einer Ebene verlaufen. In der Nähe des Schwenkantriebes 30 ist darüber hinaus ein Drehantrieb 32 vorgesehen, über welchen der zweite Schenkel 28 um seine Längsachse Y drehbar ist. Auch der Schenkel 26 ist um seine Längsachse X über einen in der Basis 18 angeordneten Drehantrieb drehbar.

Der zweite Schenkel 28 trägt an seinem freien Ende eine Werkzeugaufnahme 34, in welcher ein Düsenstock 36 aufgenommen ist. Dabei erstreckt sich der Düsenstock 36 in einer Richtung rechtwinklig zur Längsachse Y des zweiten Schenkels 28. Der Düsenstock 36 ist über einen weiteren Drehantrieb 32 um seine eigene Achse drehbar. Hierzu ist im Inneren des zweiten Schenkels 28 ein drehbares Rohr 37 angeordnet, welches an seinem vorderen Ende über ein Kegelradgetriebe 39 den Düsenstock 36 drehbar antreibt. An seinem hinteren, dem ersten Schenkel 26 zugewandten Ende nahe des Schwenkantriebes 30 ist der Drehantrieb 32 für dieses innere Rohr 37 angeordnet, welcher das Rohr 37 über eine Zahnradpaarung 35 drehend antreibt. Dieses innere Rohr 37 dient gleichzeitig der Reinigungsmittelzufuhr zu der Düse in dem Düsenstock 36. Das Reinigungsmittel wird hierzu am hinteren, d. h. dem ersten Schenkel 26 zugewandten Ende in den zweiten Schenkel 28 bzw. das innere Rohr 37 eingespeist. Entlang dem ersten Schenkel 26 erfolgt die Reinigungsmittelzufuhr über einen hier nicht gezeigten Spiralschlauch. Alternativ wäre es auch denkbar, die Reinigungsmittel in das Innere des ersten Schenkel 26 zu verlegen.

Der ganze Roboterarm 16 wird von einem Schutzmantel umhüllt, welcher hier jedoch nicht gezeigt ist. Dieser Schutzmantel aus Kunststofffolie oder Gewebe schützt den Roboterarm vor Verunreinigungen und stellt sicher, dass der Roboterarm 16 in einem hygienisch einwandfreien Zustand gehalten werden kann.

Zur Reinigung der Anlage 2 wird der Roboterarm 16 entlang der Führungsbahn 4 so verfahren, das er durch Ausfahren des Teleskops des ersten Schenkels 26 und Bewegen des zweiten Schenkels 28 um die verschiedenen Achsen die Düse des Düsenstockes 36 in solche Positionen relativ der Abfüllanlage 2 bringen kann, dass die erforderlichen Bereiche bzw. Stellen der Anlage 2, welche der Reinigung bedürfen, zielgenau gereinigt werden können, indem sie mit Reinigungs- oder Desinfektionsmittel eingesprüht werden. So kann der Roboterarm 16 entlang der Führungsbahn 4 nacheinander die zu reinigenden Stellen der Anlage 2 anfahren. Die Zufuhr von Energie- und Reinigungsmittel zu dem Roboterarm 16 erfolgt dabei über Kabel bzw. Leitungen von einem zentralen Punkt im Inneren von der Führungsbahn 4 aufgespannten Ovals. Diese Leitungen sind in den Figuren nicht gezeigt. Auch eine Datenkommunikation zu dem Roboterarm 16 kann über entsprechende Leitungen, jedoch auch drahtlos erfolgen.

Um den Mittelsteg befahren zu können, wird der Roboterarm 16 auf den Drehteller 10 gefahren. Dieser wird dann um 90° gedreht, wobei ein Teil der Führungsbahn 4, auf dem sich in diesem Moment der Roboterarm 16 befindet, ebenfalls um 90° gedreht wird, so dass er sich in Richtung des Mittelsteges erstreckt und der Roboterarm dann auf diesen auffahren kann.

Der Abzweig 8 führt zu einer hier nicht gezeigten Wartungs- und Reinigungsstation für den Roboterarm 16. Hierhin kann der Roboterarm 16 bewegt werden, um ihn zu reinigen. An der Reinigungsstation können fest installierte Reinigungsdüsen angeordnet sein, welche den Roboterarm 16 abspritzen bzw. abspülen. Darüber hinaus kann z.B. dort auch eine Werkzeugwechselstation vorgesehen sein, an welcher der Roboterarm 16 selbsttätig den Düsenstock 36 gegen einen anderen Düsenstock 36, Handhabungs- oder Bearbeitungswerkzeuge oder Sensoren austauschen kann, mit welchen weitere Bearbeitungsaufgaben durchgeführt werden können.

Anstatt die Reinigungsmittelzufuhr über eine zentrale Schlauchleitung zu dem Roboterarm 16 zu bewerkstelligen, können entlang der Führungsbahn auch mehrere Docking-Stationen 38, von den in der Figur nur eine gezeigt ist, angeordnet werden. Diese Docking-Stationen 38 weisen Anschlusskupplungen für eine Fluidleitung und gegebenenfalls elektrische Anschlüsse auf. Die Basis 18 des Roboterarmes ist dann mit entsprechend passenden Kupplungen, welche hier nicht gezeigt sind, versehen, welche mit der Docking-Station 38 in Eingriff treten können, wenn sich der Roboterarm 16 entlang der Führungsbahn 4 an der Position einer Docking-Station 38 befindet. Dann kann an dieser Stelle über die Docking-Station 38 eine Fluidverbindung zu dem Roboterarm 16 hergestellt werden, durch welche das Reinigungsmittel zugeführt werden kann. Diese Docking-Stationen 38 werden an all den Punkten entlang der Führungsbahn 4 angeordnet, an welchen der Roboterarm 16 anhalten muss, um Reinigungsaufgaben auszuführen. Auch die elektrische Energieversorgung kann über die Docking-Station 38 erfolgen. Um ein Verfahren des Roboterarms 16 von Docking-Station 38 zu Docking-Station 38 zu ermöglichen, kann in der Basis ein Akku vorgesehen sein, um den elektrischen Antrieb während des Verfahrens mit Energie zu versorgen. An der Docking-Station kann der Akku dann wieder geladen werden.

Zusätzlich zu dem Düsenstock 36 können an dem Roboterarm 16 auch noch Sensoren angeordnet werden. Alternativ können diese Sensoren austauschbar zu dem Düsenstock 36 vorgesehen sein, so dass durch einen Werkzeugwechsel der Düsenstock 36 durch einen Sensor ersetzt werden kann. Der Sensor kann z. B. dazu verwendet werden, mit Hilfe des Roboterarms 16 bestimmte Stellen bzw. Punkte in der Abfüllanlage 2 anzufahren und dort ein Bio-Monitoring durch Ablesen bzw. Einscannen von Indikatorelementen vorzunehmen. Auf diese Weise kann der Roboterarm auch dann, wenn er nicht zu Reinigungszwecken eingesetzt wird, genutzt werden. Es kann ohne zusätzliche Einrichtungen ein automatisches Bio-Monitoring bereitgestellt werden.

### Bezugszeichenliste

- 2: - Abfüllanlage
- 4: - Führungsbahn
- 6: - Mittelsteg
- 8: - Abzweig
- 10: - Drehteller
- 12: - Weiche
- 14: - Rohre
- 16: - Roboterarm
- 18: - Basis
- 20: - Führungsrollen
- 22: - Antriebsrolle
- 24: - Elektromotor
- 26: - 1. Schenkel
- 28: - 2. Schenkel
- 30: - Schwenkantrieb
- 32: - Drehantrieb
- 34: - Werkzeugaufnahme
- 35: - Zahnradpaarung
- 36: - Düsenstock
- 37: - inneres Rohr
- 38: - Docking-Station
- 39: - Kegelradgetriebe
- A: - Schwenkrichtung
- X: - Längsachse des ersten Schenkels 26
- Y: - Längsachse des zweiten Schenkels 28

## Patentansprüche

1. Lebensmittel verarbeitende Anlage (2) mit einem Reinigungssystem mit einer entlang der Außenkontur der zu reinigenden Anlage (2) verlaufenden Führungsbahn (4) und einem entlang der Führungsbahn (4) verfahrbaren Roboterarm (16), an welchem zumindest eine Düse zum Ausbringen eines Reinigungsmittels auf die Anlage angebracht ist und welcher zumindest zwei Freiheitsgrade zur Bewegung der Düse aufweist, **dadurch gekennzeichnet, dass** die Führungsbahn (4) oberhalb der zu reinigenden Anlage (2) angebracht und der Roboterarm (16) hängend an der Führungsbahn (4) geführt ist, der Roboterarm (16) aus zwei Schenkeln (26, 28) gebildet ist, wobei sich ein erster Schenkel (26) ausgehend von der Führungsbahn (4) erstreckt und der zweite Schenkel (28) an dem der Führungsbahn (4) abgewandten Ende des ersten Schenkels (26) vorzugsweise schwenkbar angelenkt ist, und dass die Düse an dem Roboterarm derart angebracht ist, dass durch Verfahren und Bewegen des Roboterarmes (16) die zumindest eine Düse gezielt an einzelne Punkte der Anlage zu deren Reinigung bewegt werden kann, wobei die Anzahl der Freiheitsgrade des Roboterarmes (16) und dessen geometrische Gestaltung sowie die Anordnung der Führungsbahn so gewählt sind, dass durch Verfahren und Bewegung des Roboterarmes (16) die zumindest eine Düse an alle zu reinigenden Stellen der Anlage (2) bewegt werden kann, um dort punktgenau das Reinigungsmittel auszubringen.

2. Lebensmittel verarbeitende Anlage (2) nach Anspruch 1, **dadurch gekennzeichnet, dass** der Roboterarm (16) sechs Freiheitsgrade für die Bewegung der Düse (36) aufweist.

3. Lebensmittel verarbeitende Anlage (2) nach einem der vorangehenden Ansprüche, **dadurch gekennzeichnet, dass** die Führungsbahn (4) entlang mehrerer zu reinigender Anlagen (2) verläuft.

4. Lebensmittel verarbeitende Anlage (2) nach einem der vorangehenden Ansprüche, **dadurch gekennzeichnet, dass** in der Führungsbahn (4) zumindest eine Verzweigung (6, 8) vorhanden ist, wobei am Abzweigpunkt eine Weiche (12) oder ein Drehteller (10) zur Richtungsänderung angeordnet ist.

5. Lebensmittel verarbeitende Anlage (2) nach einem der vorangehenden Ansprüche, **dadurch gekennzeichnet, dass** eine Reinigungsstation vorgesehen ist, zu welcher die Führungsbahn (4) führt und an welcher Reinigungsdüsen zur Außenreinigung des Roboterarmes (16) angeordnet sind.

6. Lebensmittel verarbeitende Anlage (2) nach einem der vorangehenden Ansprüche, **dadurch gekennzeichnet, dass** die Führungsbahn (4) aus zumindest einem Rundprofil (14), vorzugsweise zwei parallel zueinander verlaufenden Rundprofilen (14) gebildet ist.

7. Lebensmittel verarbeitende Anlage (2) nach einem der vorangehenden Ansprüche, **dadurch gekennzeichnet, dass** im Inneren der Führungsbahn (4) eine Fluidleitung zur Zufuhr des Reinigungsmittels ausgebildet ist.

8. Lebensmittel verarbeitende Anlage (2) nach einem der vorangehenden Ansprüche, **dadurch gekennzeichnet, dass** der Roboterarm (16) über eine Schlauchleitung mit einem zentralen Anschluss für die Zufuhr des Reinigungsmittels verbunden ist.

9. Lebensmittel verarbeitende Anlage (2) nach einem der vorangehenden Ansprüche, **dadurch gekennzeichnet, dass** der Roboterarm (16) eine Verfahreinheit (18) aufweist, welche an der Führungsbahn (4) geführt ist und einen Antrieb (22, 24) zum Verfahren des Roboterarms (16) entlang der Führungsbahn (4) hat.

10. Lebensmittel verarbeitende Anlage (2) nach Anspruch 9, **dadurch gekennzeichnet, dass** der erste Schenkel (26) sich in vertikaler Richtung (X) erstreckt und bevorzugt teleskopierbar ausgebildet ist und/oder bei welchem zumindest einer der Schenkel (26, 28) um seine Achse (X, Y) drehbar ist.

11. Lebensmittel verarbeitende Anlage (2) nach einem der vorangehenden Ansprüche, **dadurch gekennzeichnet, dass** der zweite Schenkel (28) an seinem freien Ende einen Düsenstock (36) mit der Düse trägt, wobei der Düsenstock (36) vorzugsweise drehbar angeordnet ist.

12. Lebensmittel verarbeitende Anlage (2) nach einem der vorangehenden Ansprüche, **dadurch gekennzeichnet, dass** der Roboterarm (16) eine Werkzeugaufnahme (34) aufweist, in welcher ein Düsenstock (36) mit der Düse austauschbar aufgenommen ist und/oder welche zur Aufnahme von Bearbeitungs- oder Handhabungswerkzeugen und/oder Sensoren ausgebildet ist.

13. Lebensmittel verarbeitende Anlage (2) nach einem der vorangehenden Ansprüche, **dadurch gekennzeichnet, dass** die Anlage derart ausgebildet ist, dass der Roboterarm (16), in den Zeiten, in denen er nicht zur Reinigung der Anlage (2) eingesetzt wird, an oder in der Anlage (2) Bearbeitungs- oder Handhabungsaufgaben ausführen kann.

14. Lebensmittel verarbeitende Anlage (2) nach einem der vorangehenden Ansprüche, **dadurch gekennzeichnet, dass** der Roboterarm (16) zumindest einen Sensor zur Ausführung eins Bio-Monitoring an der Anlage trägt.

## Claims

1. An installation (2) processing foodstuffs, with a cleaning system with a guide track (4) running along the outer contour of the installation (2) to be cleaned, and with a robot arm (16) which is displaceable along the guide track (4) and on which at least one nozzle for discharging a cleaning agent onto the installation is attached and which has at least two degrees of freedom for moving the nozzle, **characterised in that** the guide track (4) is attached above the installation (2) to be cleaned, and the robot arm (16) is guided on the guide track (4) in a suspended manner, and the robot arm (16) is formed from two limbs (26, 28), wherein a first limb (26) extends in a manner departing from the guide track (4), and the second limb (28) is preferably pivotably articulated on the end of the first limb (26) which is away from the guide track (4), and that the nozzle is attached on the robot arm in a manner such that the at least one nozzle can be moved in a targeted manner to individual points of the installation for its cleaning, by way of displacing and moving the robot arm (16), wherein the number of degrees of freedom of the robot arm (16) and its geometric design as well as the arrangement of the guide track are selected such that the at least one nozzle can be moved to all locations of the installation (2) which are to be cleaned, by way of displacing and moving the robot arm (16), in order to discharge the cleaning agent in a very precise manner there.

2. An installation (2) processing foodstuffs, according to claim 1, **characterised in that** the robot arm (16) has six degrees of freedom for the movement of the nozzle (36).

3. An installation (2) processing foodstuffs, according to one of the preceding claims, **characterised in that** the guide track (4) runs along several installations (2) to be cleaned.

4. An installation (2) processing foodstuffs, according to one of the preceding claims, **characterised in that** at least one branching (6, 8) is present in the guide track (4), wherein points (12) or a rotary plate (10) is arranged at the branching point, for directional change.

5. An installation (2) processing foodstuffs, according to one of the preceding claims, **characterised in that** a cleaning station is provided, to which the guide track (4) leads and at which cleaning nozzles for the outer cleaning of the robot arm (16) are arranged.

6. An installation (2) processing foodstuffs, according to one of the preceding claims, **characterised in that** the guide track (4) is formed from at least one round profile (14), preferably two round profiles (14) which run parallel to one another.

7. An installation (2) processing foodstuffs, according to one of the preceding claims, **characterised in that** a fluid conduit for the feed of the cleaning agent is formed in the inside of the guide track (4).

8. An installation (2) processing foodstuffs, according to one of the preceding claims, **characterised in that** the robot arm (16) is connected via a flexible tubing conduit to a central connection for the supply of the cleaning agent.

9. An installation (2) processing foodstuffs, according to one of the preceding claims **characterised in that** the robot arm (16) comprises a displacement unit (18), which is guided on the guide track (4) and comprises a drive (22, 24) for displacing the robot arm (16) along the guide track (4).

10. An installation (2) processing foodstuffs, according to claim 9, **characterised in that** the first limb (26) extends in the vertical direction (X) and is designed preferably in a telescopic manner and/or that at least one of the limbs (26, 28) is rotatable about its axis (X, Y).

11. An installation (2) processing foodstuffs, according to one of the preceding claims, **characterised in that** the second limb (28) at its free end carries a nozzle holder (36) with the nozzle, wherein the nozzle holder (36) is arranged in a preferably rotatable manner.

12. An installation (2) processing foodstuffs, according to one of the preceding claims, **characterised in that** the robot arm (16) comprises a tool receiver (34), in which a nozzle holder (36) with the nozzle is received in an exchangeable manner and/or which is designed for receiving machining tools or handling tools and/or sensors.

13. An installation (2) processing foodstuffs, according to one of the preceding claims, **characterised in that** the installation is designed in a manner such that the robot arm (16) can carry out processing tasks or handling tasks on or in the installation (2), in the times in which it is not applied for cleaning the installation (2).

14. An installation (2) processing foodstuffs, according to one of the preceding claims **characterised in that** the robot arm (16) carries at least one sensor for carrying out a bio-monitoring on the installation.

## Revendications

1. Installation de traitement de denrées (2) avec un système de nettoyage avec une piste de guidage (4) le long de contour extérieur de l'installation à nettoyer (2) et avec un bras de robot (16) déplaçable le long de la piste de guidage (4) auquel est rapporté au moins une buse pour l'application d'un produit de nettoyage à l'installation et qui présente au moins deux degrés de liberté pour le mouvement de la buse, **caractérisée en ce que** la piste de guidage (4) est montée au-dessus de l'installation (2) à nettoyer et que le bras de robot (16) est guidé le long de la piste de guidage (4) de manière suspendue, que le bras de robot (16) est formé de deux branches (26, 28), cependant une première branche (26) s'étendant à partir de la piste de guidage (4) et la seconde branche (28) étant articulée, de préférence de manière pivotante, à l'extrémité de la première branche (26) éloignée de la piste de guidage (4), et **en ce que** la buse est montée sur le bras de robot de façon que ladite au moins une buse puisse être emmenée de manière ciblée, par un déplacement et un mouvement du bras de robot (16), à des points particuliers de l'installation pour le nettoyage de celle-ci, cependant le nombre de degrés de liberté du bras de robot (16) et sa conception géométrique ainsi que la disposition de la piste de guidage étant choisis de façon que, par un déplacement et un mouvement du bras de robot (16), ladite au moins une buse puisse être déplacée à tous les endroits à nettoyer de l'installation (2), afin d'y appliquer le produit de nettoyage avec précision.

2. Installation de traitement de denrées (2) selon la revendication 1, **caractérisée en ce que** le bras de robot (16) présente six degrés de liberté pour le mouvement de la buse (36).

3. Installation de traitement de denrées (2) selon l'une des revendications précédentes, **caractérisée en ce que** la piste de guidage (4) s'étend le long de plusieurs installations (2) à nettoyer.

4. Installation de traitement de denrées (2) selon l'une des revendications précédentes, **caractérisée en ce que** la piste de guidage (4) comporte au moins une dérivation (6, 8), où au point de dérivation, il est disposé un aiguillage (12) ou une plaque tournante (10) pour le changement de direction.

5. Installation de traitement de denrées (2) selon l'une des revendications précédentes, **caractérisée en ce qu'**une station de nettoyage est prévue vers laquelle la piste de guidage (4) mène et sur laquelle sont disposées des buses de nettoyage pour le nettoyage extérieur du bras de robot (16).

6. Installation de traitement de denrées (2) selon l'une des revendications précédentes, **caractérisée en ce que** la piste de guidage (4) est formée par au moins un profilé rond (14), de préférence de deux profilés ronds (14) parallèles l'un à l'autre.

7. Installation de traitement de denrées (2) selon l'une des revendications précédentes, **caractérisée en ce que**, à l'intérieur de la piste de guidage (4), un conduit de fluide est formé pour l'acheminement du produit de nettoyage.

8. Installation de traitement de denrées (2) selon l'une des revendications précédentes, **caractérisée en ce que** le bras de robot (16) est raccordé par un conduit flexible à un raccord central pour l'acheminement du produit de nettoyage.

9. Installation de traitement de denrées (2) selon l'une des revendications précédentes, **caractérisée en ce que** le bras de robot (16) comprend une unité de déplacement (18) qui est guidée sur la piste de guidage (4) et qui comprend un entraînement (22, 24) pour le déplacement du bras de robot (16) le long de la piste de guidage (4).

10. Installation de traitement de denrées (2) selon la revendication 9, **caractérisée en ce que** la première branche (26) s'étend en direction verticale (X) et est formée de préférence de façon télescopique et/ou où au moins une des branches (26, 28) est adaptée pour pouvoir tourner autour de son axe (X, Y).

11. Installation de traitement de denrées (2) selon l'une des revendications précédentes, **caractérisée en ce que** la seconde branche (28) porte à son extrémité libre une tige de buse (36) avec la buse, la tige de buse (36) étant disposée de préférence de manière rotative.

12. Installation de traitement de denrées (2) selon l'une des revendications précédentes, **caractérisée en ce que** le bras de robot (16) comprend une réception d'outil (34) dans laquelle une tige de buse (36) avec la buse est reçue de manière échangeable et/ou qui est conformée pour la réception d'outils de traitement ou de manutention et/ou de capteurs.

13. Installation de traitement de denrées (2) selon l'une des revendications précédentes, **caractérisée en ce que** l'installation est conformée de façon que le bras de robot (16) puisse être utilisé, pendant les temps pendant lesquels il n'est pas utilisé pour le nettoyage de l'installation (2), pour des tâches de traitement ou de manutention.

14. Installation de traitement de denrées (2) selon l'une des revendications précédentes, **caractérisée en ce que** le bras de robot (16) porte au moins un capteur pour la mise en oeuvre, sur l'installation, d'un bio-monitoring.
